# EUROPEAN PATENT APPLICATION

(11) **EP 4 748 703 A1**
(43) Date of publication of application: **27.05.2026**
(21) Application number: 25216252.4
(22) Date of filing: 17.11.2025
(51) Int. Cl.: B63H 25/04, B63H 25/42, G05D 1/611, B63H 21/17

(54) **SYSTEM FOR CONTROLLING WATERCRAFT, METHOD OF CONTROLLING WATERCRAFT, AND WATERCRAFT**

(30) Priority: 18.11.2024 JP 2024201139
(71) Applicant: Yamaha Hatsudoki Kabushiki Kaisha, Iwata-shi, Shizuoka 438-8501 (JP)
(72) Inventor: Moritani, Kento, Iwata-shi, Shizuoka, 4388501 (JP); Ikegaya, Yuji, Iwata-shi, Shizuoka, 4388501 (JP)
(74) Representative: Grünecker Patent- und Rechtsanwälte PartG mbB

(57) **Abstract**

The present watercraft operating system (100) includes a marine propulsion device (3) and a watercraft operating controller (30). Under a compass direction keeping control for keeping a watercraft (10) oriented in a target compass direction, the watercraft operating controller (30) turns a propeller (14) between a first steering position and a second steering position at a predetermined time interval. The first steering position is a position where the thrust is applied to the watercraft (10) in a back-and-forth direction and a right-and-left direction. The second steering position is obtained by reversing the first steering position in either the back-and-forth direction or the right-and-left direction. The watercraft operating controller (30) controls the magnitude of the thrust and a rotational direction of the propeller (14) such that the watercraft (10) performs bow turning toward the target compass direction when the propeller is located in each of the first and second steering positions. The watercraft operating controller (30) controls the rotational direction of the propeller (14) such that a direction of the thrust in the back-and-forth direction generated at the first steering position and a direction of the thrust in the back-and-forth direction generated at the second steering position are opposite when the watercraft (10) is caused to perform bow turning in the same direction at the first steering position and the second steering position.

## Description

The present invention relates to a system for controlling a watercraft, a method of controlling a watercraft, and a watercraft.

As a control executed in an automated watercraft operation, there has been known a compass direction keeping control for keeping a watercraft oriented to a target compass direction (JP 2023-068838 A). The compass direction keeping control serves as a type of control executed in the automated watercraft operation to move the watercraft under the influence of external forces, with the watercraft being kept oriented to the target compass direction by causing the watercraft to perform bow turning.

Under the compass direction keeping control, when a thrust is generated for causing the watercraft to perform bow turning, not only a thrust component oriented in the right-and-left direction but also that oriented in the back-and-forth direction are outputted to the watercraft. Because of this, in such an exemplary situation that the watercraft is applied with an external force oriented in one direction, when the compass direction keeping control is executed, with the rudder angle of a marine propulsion device being turned in one direction, the thrust component outputted in the back-and-force direction is undesirably oriented to only either the front side or the rear side in an eccentric manner, whereby it is concerned that the watercraft is gradually displaced in position in the back-and-forth direction.

It is an object of the present disclosure to achieve enhancement in position keeping accuracy under a compass direction keeping control.

A system according to an aspect of the present disclosure relates to a system for controlling a watercraft and includes a marine propulsion device and a controller. The marine propulsion device includes a propeller and generates a thrust for propelling the watercraft. The controller is configured or programmed to execute a compass direction keeping control for keeping the watercraft oriented in a target compass direction by controlling both a magnitude and a direction of the thrust. The controller is further configured or programmed to turn the propeller between a first steering position and a second steering position at a predetermined time interval under the compass direction keeping control. The first steering position is a position where the thrust is applied to the watercraft in a back-and-forth direction and a right-and-left direction. The second steering position is obtained by reversing the first steering position in either the back-and-forth direction or the right-and-left direction. The controller is further configured or programmed to control the magnitude of the thrust and a rotational direction of the propeller such that the watercraft performs bow turning toward the target compass direction when the propeller is located in each of the first and second steering positions. The controller is further configured or programmed to control the rotational direction of the propeller such that a direction of the thrust in the back-and-forth direction generated at the first steering position and a direction of the thrust in the back-and-forth direction generated at the second steering position are opposite when the watercraft is caused to perform bow turning in the same direction at the first steering position and the second steering position.

A method according to another aspect of the present disclosure relates to a method of controlling a watercraft and includes executing a compass direction keeping control for keeping the watercraft oriented in a target compass direction by controlling both a magnitude and a direction of a thrust generated by a marine propulsion device, turning a propeller of the marine propulsion device between a first steering position and a second steering position at a predetermined time interval under the compass direction keeping control, controlling the magnitude of the thrust and a rotational direction of the propeller such that the watercraft performs bow turning toward the target compass direction when the propeller is located in each of the first and second steering positions, and controlling the rotational direction of the propeller such that a direction of the thrust in a back-and-forth direction generated at the first steering position and a direction of the thrust in the back-and-forth direction generated at the second steering position are opposite when the watercraft is caused to perform bow turning in the same direction at the first steering position and the second steering position. The first steering position is a position where the thrust is applied to the watercraft in the back-and-forth direction and a right-and-left direction. The second steering position is obtained by reversing the first steering position in either the back-and-forth direction or the right-and-left direction.

In the system and the method according to the present disclosure, under the compass direction keeping control, when the watercraft is caused to perform bow turning in an identical direction regardless of in which of the first and second steering positions the propeller is located, the rotational direction of the propeller is controlled such that the thrust generated in the back-and-forth direction when the propeller is located in the first steering position and that generated in the back-and-forth direction when the propeller is located in the second steering position are oriented in opposition to each other. In other words, by reversing the first steering position of the propeller at the predetermined time interval, a back-and-forth directional thrust component, oriented in opposition to that generated when the propeller is located in the first steering position, is enabled to be generated when the propeller is located in the second steering position. Accordingly, the back-and-forth directional thrust component, generated by the thrust for causing the watercraft to perform bow turning, can be inhibited from being oriented to only either the front side or the rear side in an eccentric manner. As a result, it is made possible to achieve enhancement in position keeping accuracy under the compass direction keeping control.

Overall, according to the present disclosure, it is made possible to achieve enhancement in position keeping accuracy under the compass direction keeping control.

### BRIEF DESCRIPTION OF THE DRAWINGS

FIG. 1 is a plan view of a watercraft to which a marine propulsion device is mounted in a preferred embodiment.
FIG. 2 is a side view of the marine propulsion device.
FIG. 3 is a diagram for explaining an electric motor.
FIG. 4 is a schematic diagram showing a configuration of a watercraft operating system.
FIG. 5 is a front view of a joystick.
FIG. 6 is a diagram showing a series of motions of the watercraft under a compass direction keeping control.

### DETAILED DESCRIPTION OF EMBODIMENTS

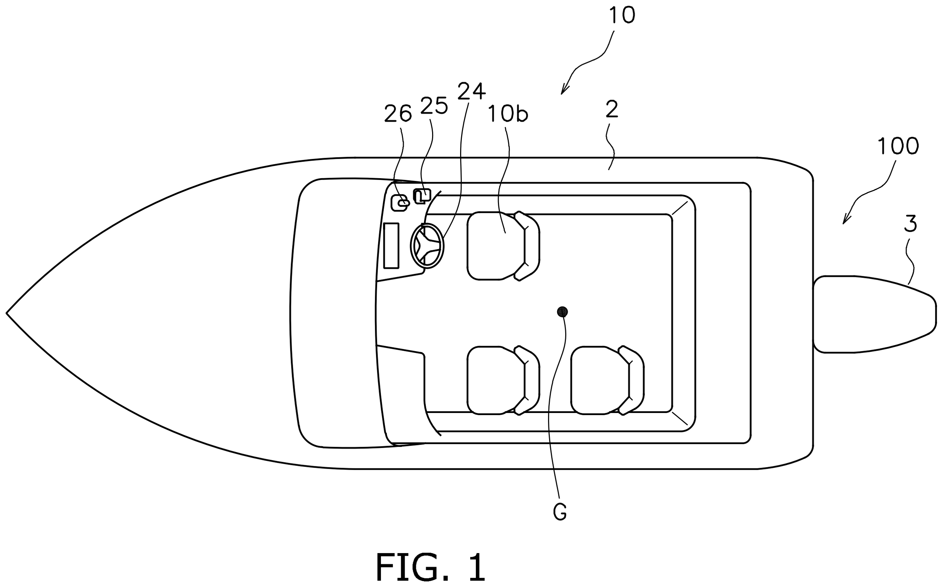

A preferred embodiment will be hereinafter explained with reference to drawings. FIG. 1 is a perspective view of a watercraft 10 in which a watercraft operating system 100 according to the preferred embodiment is disposed. The watercraft 10 includes a hull 2 and a marine propulsion device 3. When described in detail, the watercraft 10 includes a single marine propulsion device 3. In the present preferred embodiment, the marine propulsion device 3 is an electric outboard motor. The marine propulsion device 3 is attached to the stern of the hull 2 of the watercraft 10. The marine propulsion device 3 is disposed on the stern in the middle of the watercraft 10 in the right-and-left direction. The marine propulsion device 3 generates a thrust for propelling the watercraft 10.

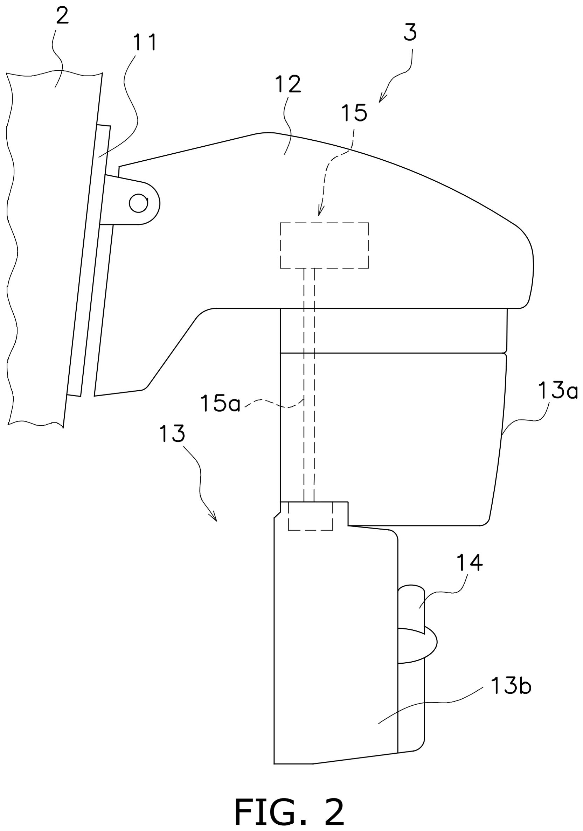

FIG. 2 is a side view of the marine propulsion device 3. The marine propulsion device 3 is attached to the hull 2 through a bracket 11. The marine propulsion device 3 is supported by the bracket 11.

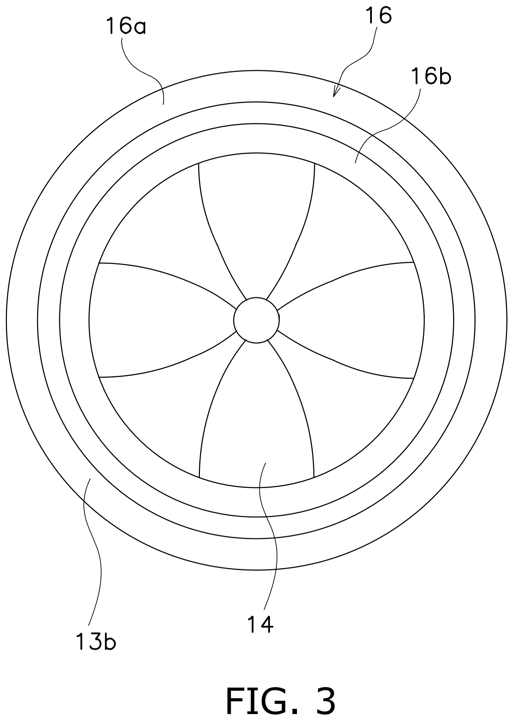

The marine propulsion device 3 includes an upper portion 12, a lower portion 13, a propeller 14, a steering device 15, and an electric motor 16 (see FIG. 3). The upper portion 12 is attached to the bracket 11. The lower portion 13 is disposed below the bracket 11. The lower portion 13 is supported to be pivotable about the axis of a steering axle 15a (to be described) with respect to the upper portion 12. The lower portion 13 includes a case portion 13a and a duct 13b. The case portion 13a is integrated with the duct 13b. The duct 13b is disposed below the case portion 13a. The duct 13b has a tubular shape. The propeller 14 is disposed on the duct 13b of the lower portion 13. The propeller 14 generates the thrust when rotated by the driving force of the electric motor 16.

The steering device 15 is configured to pivot the lower portion 13. By pivoting the lower portion 13, the steering device 15 changes the orientation of the thrust generated by the rotation of the propeller 14. The steering device 15 includes the steering axle 15a. The steering axle 15a extends in the up-and-down direction. The steering axle 15a is connected to the upper portion 12 and the duct 13b of the lower portion 13. The steering device 15 includes a motor (not shown in the drawings) for rotating the steering axle 15a about the axis thereof. It should be noted that in the present preferred embodiment, the lower portion 13 of the marine propulsion device 3 is pivotable in the right-and-left direction within an angular range of about 140 degrees (70 degrees on the right side and 70 degrees on the left side). Because of this, the steering device 15 is configured to pivot the lower portion 13 within the angular range of 140 degrees.

The electric motor 16 is driven when supplied with electric power from a battery (not shown in the drawings) disposed in the hull 2. The electric motor 16 includes a stator portion 16a and a rotor portion 16b. The stator portion 16a is fixed to the duct 13b. The stator portion 16a includes a coil (not shown in the drawings). The rotor portion 16b is fixed to the propeller 14. The stator portion 16a is disposed in opposition to the rotor portion 16b. The rotor portion 16b includes a plurality of magnets (not shown in the drawings). When the coil of the stator portion 16a is electrified, the propeller 14 is rotated together with the rotor portion 16b.

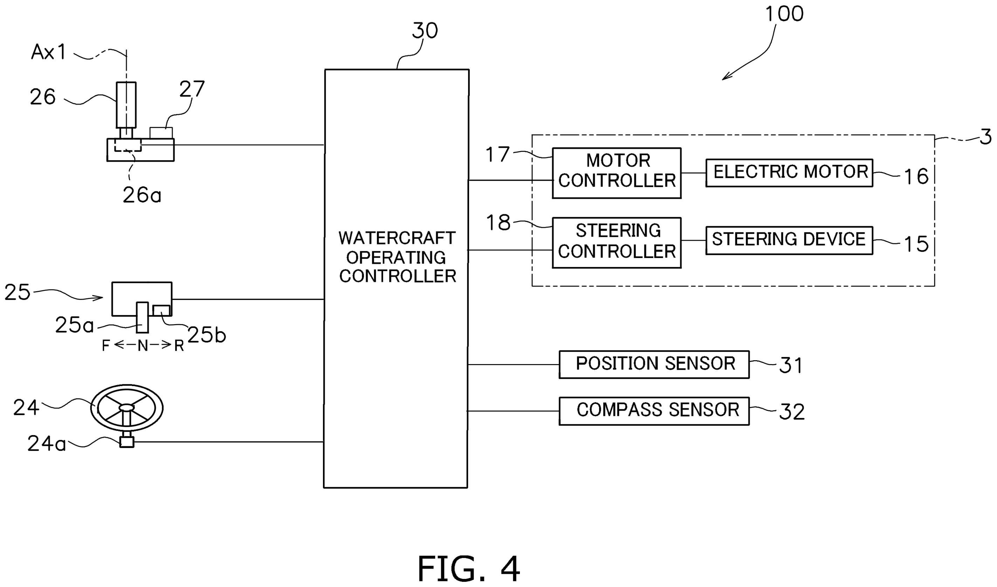

FIG. 4 is a schematic diagram showing a configuration of the watercraft operating system 100. The marine propulsion device 3 includes a motor controller 17 and a steering controller 18. The motor controller 17 and the steering controller 18 are control circuits, each of which includes a processor such as a CPU (Central Processing Unit) and memories such as a RAM (Random Access Memory) and a ROM (Read-Only Memory). The motor controller 17 has stored programs and data for controlling the electric motor 16. The motor controller 17 controls the rotational direction and the output of the electric motor 16 in accordance with a command signal outputted thereto from a watercraft operating controller 30 (to be described).

The steering controller 18 controls the driving of the steering device 15 in accordance with a command signal outputted thereto from the watercraft operating controller 30. The steering controller 18 has stored programs and data for controlling the steering device 15.

The watercraft operating system 100 includes a steering wheel 24, a remote controller 25, and a joystick 26. The steering wheel 24, the remote controller 25, and the joystick 26 are disposed in a cockpit 10b of the watercraft 10. The cockpit 10b is disposed further on the front side than the center of gravity (G) of the watercraft 10 in the back-and-forth direction. The steering wheel 24, the remote controller 25, and the joystick 26 are manually operable.

The steering wheel 24 serves as a device for allowing an operator to manipulate the turning direction of the watercraft 10. The steering wheel 24 includes a sensor 24a. The sensor 24a outputs a steering signal indicating the operating direction and the operating amount of the steering wheel 24.

The remote controller 25 includes a throttle lever 25a. The throttle lever 25a serves as a device for allowing the operator to regulate the magnitude of the thrust generated from the marine propulsion device 3. The throttle lever 25a also serves as a device for allowing the operator to switch the direction of the thrust generated from the marine propulsion device 3 between a forward moving direction and a rearward moving direction. The throttle lever 25a is operable from a neutral position to a forward moving position and a rearward moving position. The neutral position is an intermediate position between the forward moving position and the rearward moving position. The throttle lever 25a includes a sensor 25b. The sensor 25b outputs a throttle signal indicating the operating direction and the operating amount of the throttle lever 25a.

The joystick 26 is tiltable from the neutral position in the back-and-forth direction and the right-and-left direction (sideways direction). In other words, the joystick 26 is tiltable in all compass directions. The joystick 26 is rotatable about a rotational axis Ax1. In other words, the joystick 26 is operable to twist clockwise and counterclockwise about the rotational axis Ax1. The joystick 26 includes a sensor 26a. The sensor 26a outputs an operating signal indicating operating the joystick 26. The operating signal contains information regarding the tilt direction and the tilt amount of the joystick 26. The operating signal also contains information regarding the twist direction and the twist amount of the joystick 26. The rudder angle, the magnitude of the output, and the direction of the output of the marine propulsion device 3 are controlled in accordance with the tilt amount and the tilt direction of the joystick 26.

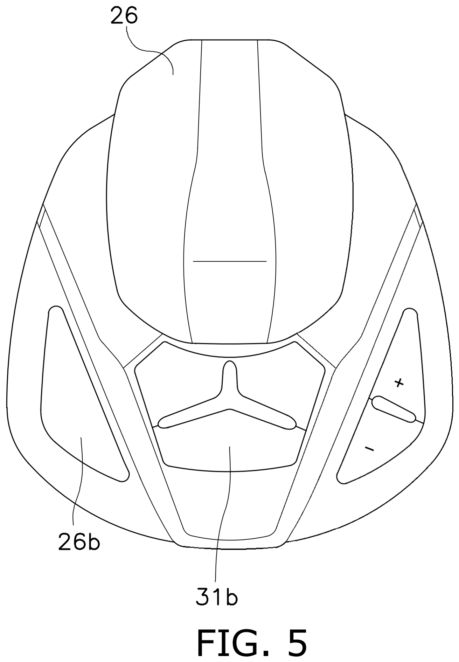

FIG. 5 is a front view of the joystick 26. The joystick 26 includes a joystick button 26b and a compass direction keeping button 31b. The joystick button 26b serves as a button for switching between the following modes: a joystick mode for operating the watercraft 10 with the joystick 26 and a normal mode for operating the watercraft 10 with the remote controller 25 and the steering wheel 24. The compass direction keeping button 31b serves as a button for receiving an operation for starting the compass direction keeping control and an operation for ending the compass direction keeping control.

The watercraft operating system 100 includes the watercraft operating controller 30. The watercraft operating controller 30 includes a processor such as a CPU and memories such as a RAM and a ROM. The watercraft operating controller 30 has stored programs and data for controlling the marine propulsion device 3. The watercraft operating controller 30 is connected to the motor controller 17 and the steering controller 18 through wired or wireless communication. The watercraft operating controller 30 is connected to the steering wheel 24, the remote controller 25, and the joystick 26 through wired or wireless communication.

The watercraft operating controller 30 outputs command signals to the motor controller 17 and the steering controller 18 based on signals outputted thereto from the sensors 24a and 25b. The watercraft operating controller 30 controls the rudder angle, the magnitude of the output, and the direction of the output of the marine propulsion device 3 through the motor controller 17 and the steering controller 18. The watercraft operating controller 30 controls the direction of the output of the marine propulsion device 3 by controlling the rotational direction of the propeller 14.

The watercraft operating controller 30 controls the rudder angle, the magnitude of the output, and the direction of the output of the marine propulsion device 3 in accordance with the tilt direction and the tilt amount of the joystick 26.

The watercraft operating controller 30 changes the rudder angle of the marine propulsion device 3 such that the watercraft 10 performs bow turning in a direction corresponding to the twist direction of the joystick 26. The watercraft operating controller 30 causes the marine propulsion device 3 to generate a thrust in accordance with the twist amount of the joystick 26.

The watercraft operating controller 30 changes the rudder angle of the marine propulsion device 3 such that the watercraft 10 turns in accordance with operating the joystick 26 to not only tilt forward or rearward but also twist. At this time, the watercraft operating controller 30 causes the marine propulsion device 3 to generate a thrust in accordance with the tilt amount of the joystick 26 and changes the rudder angle of the marine propulsion device 3 such that the watercraft 10 turns in a direction corresponding to the twist direction of the joystick 26.

The watercraft operating system 100 includes a position sensor 31 and a compass sensor 32. The position sensor 31 is, for instance, a receiver for a GNSS (Global Navigation Satellite System) such as a GPS (Global Positioning System). The position sensor 31 outputs a signal indicating the present position of the watercraft 10. The position sensor 31 is connected to the watercraft operating controller 30 in a communicable manner. The watercraft operating controller 30 obtains the position of the watercraft 10 based on the signal outputted thereto from the position sensor 31.

The compass sensor 32 detects the present compass direction of the watercraft 10. The compass sensor 32 is, for instance, an IMU (Inertial Measurement Unit). The compass sensor 32 is connected to the watercraft operating controller 30 in a communicable manner.

When receiving an operating signal outputted in accordance with operating the compass direction keeping button 31b, for instance, the watercraft operating controller 30 executes the compass direction keeping control for controlling the marine propulsion device 3 such that the watercraft 10 is kept oriented in a target compass direction. The compass direction keeping control serves as a type of control executed in an automated watercraft operation to move the watercraft 10 under the influence of external forces, including streams of wind and water, with the watercraft 10 being kept oriented to the target compass direction by causing the watercraft 10 to perform bow turning. When the compass direction of the watercraft 10 is displaced from the target compass direction by a predetermined angle or greater under the compass direction keeping control, the watercraft operating controller 30 is configured to cause the watercraft 10 to perform bow turning so as to modify the displacement in compass direction of the watercraft 10. For example, the target compass direction is a compass direction in which the watercraft 10 was oriented at a point of time when the watercraft operating controller 30 had received the operating signal from the compass direction keeping button 31b. Alternatively, for instance, the target compass direction may be an arbitrary compass direction to be specified by an operation inputted by the operator.

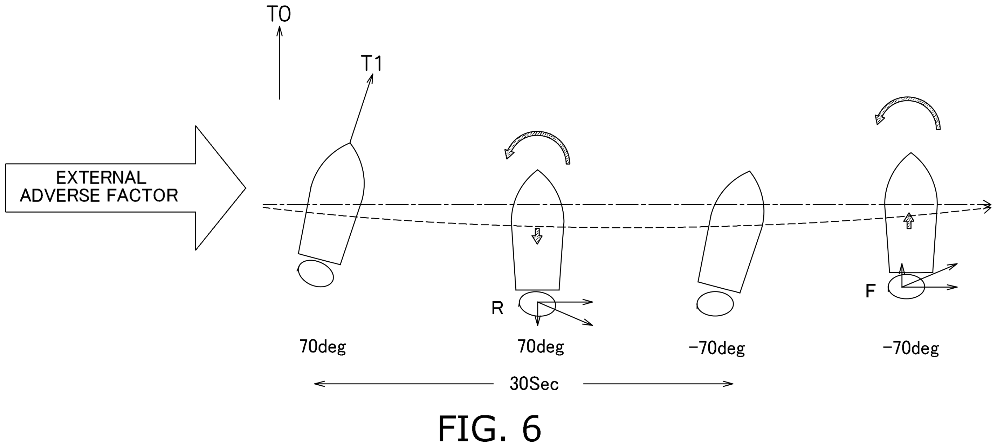

FIG. 6 is a diagram schematically showing a series of motions of the watercraft 10 under the compass direction keeping control. The watercraft operating controller 30 turns the propeller 14 between a first steering position and a second steering position at a predetermined time interval under the compass direction keeping control. **In** other words, the propeller 14 of the marine propulsion device 3 is controlled to continue to turn between the first steering position and the second steering position at constant time interval under the compass direction keeping control.

The first and second steering positions serve as positions in which the thrust is applied to the watercraft 10 in the back-and-forth direction and the right-and-left direction. The second steering position is set by reversing the first steering position in either the back-and-forth direction or the right-and-left direction. In the present preferred embodiment, the second steering position is set by reversing the first steering position in the right-and-left direction. The first steering position is a position turned rightward by 70 degrees (+70 degrees) with respect to the back-and-forth direction. The second steering position is a position turned leftward by 70 degrees (-70 degrees) with respect to the back-and-forth direction. In the present preferred embodiment, the first and second steering positions correspond to the maximum rudder angles to which the lower portion 13 of the marine propulsion device 3 is pivotable.

The rudder angle corresponding to the first steering position is preferably set to be greater than or equal to 60 degrees and less than or equal to 80 degrees. By thus setting the rudder angle corresponding to the first steering position to be greater than or equal to 60 degrees and less than or equal to 80 degrees, when the watercraft 10 is caused to perform bow turning under the compass direction keeping control, the operator of the watercraft 10 feels as if the watercraft 10 performed bow turning about the cockpit 10b.

The predetermined time interval is set to be greater than or equal to 20 seconds and less than or equal to 70 seconds. In the present preferred embodiment, the predetermined time interval is set to be 30 seconds. In other words, the watercraft operating controller 30 continues to execute, for instance, the following steering control from starting to ending the compass direction keeping control: under the compass direction keeping control, when 30 seconds elapses after the propeller 14 is turned to the first steering position, the propeller 14 is turned from the first steering position to the second steering position; then, when 30 seconds elapses after the propeller 14 is turned to the second steering position, the propeller 14 is turned from the second steering position to the first steering position.

Under the compass direction keeping control, the watercraft operating controller 30 may change the value for the predetermined time interval in accordance with the velocity of the watercraft 10 moving in the right-and-left direction. For example, when the watercraft 10 moves fast in the right-and-left direction, the watercraft operating controller 30 may increase the value for of the predetermined time interval. The velocity of the watercraft 10 moving in the right-and-left direction may be calculated by, for instance, the position sensor 31 or a velocity sensor.

Under the compass direction keeping control, the watercraft operating controller 30 controls the magnitude of the thrust and the rotational direction of the propeller 14 such that the watercraft 10 performs bow turning toward the target compass direction when the propeller 14 is located in each of the first and second steering positions. For example, the watercraft operating controller 30 controls the magnitude of the thrust in accordance with the amount of displacement in compass direction of the watercraft 10. When the watercraft 10 is caused to perform bow turning in an identical direction regardless of in which of the first and second steering positions the propeller 14 is located, the watercraft operating controller 30 controls the rotational direction of the propeller 14 such that the back-and-forth directional thrust, generated when the propeller 14 is located in the first steering position, is oriented in opposition to that generated when the propeller 14 is located in the second steering position. Accordingly, a back-and-forth directional thrust component, oriented in opposition to that generated when the propeller 14 is located in the first steering position, is enabled to be generated when the propeller 14 is located in the second steering position.

FIG. 6 exemplifies the above in detail as follows: when the compass direction (T1) of the bow of the watercraft 10 is displaced rightward from the target compass direction (T0) under the influence of an external adverse factor acting from the left side, if the propeller 14 is located in the first steering position, the watercraft operating controller 30 controls the rotational direction of the propeller 14 such that the watercraft 10 performs bow turning leftward about the center of gravity G of the watercraft 10. At this time, a thrust component is outputted rearward by the thrust for causing the watercraft 10 to perform bow turning; hence, the watercraft 10 is displaced in position rearward. When 30 seconds elapses after the propeller 14 is turned to the first steering position, the watercraft operating controller 30 turns the propeller 14 to the second steering position. If the compass direction T1 of the bow of the watercraft 10 is displaced rightward from the target compass direction T0 when the propeller 14 is located in the second steering position, the watercraft operating controller 30 controls the rotational direction of the propeller 14 such that the watercraft 10 performs bow turning leftward about the center of gravity G of the watercraft 10. Accordingly, a back-and-forth directional thrust component, oriented in opposition to that generated when the propeller 14 is located in the first steering position, is generated when the propeller 14 is located in the second steering position. As a result, the watercraft 10 can be finally inhibited from being displaced in the back-and-forth direction.

When the propeller 14 is turned from the first steering position to the second steering position, the watercraft operating controller 30 stops generating a thrust until the propeller 14 approaches the second steering position. When the propeller 14 is turned from the second steering position to the first steering position, the watercraft operating controller 30 stops generating a thrust until the propeller 14 approaches the first steering position. In other words, under the compass direction keeping control, even when the compass direction of the watercraft 10 is displaced from the target compass direction by a predetermined angle or greater, the watercraft operating controller 30 controls to stop the driving of the electric motor 16 until the propeller 14 approaches the first steering position or until the propeller 14 approaches the second steering position. Accordingly, the watercraft 10 can be inhibited from being displaced in the back-and-forth direction. For example, under the compass direction keeping control, when the compass direction of the watercraft 10 is displaced from the target compass direction by a predetermined angle or greater, the watercraft operating controller 30 is configured to generate a thrust if the propeller 14 is turned either rightward or leftward by a rudder angle of greater than 55 degrees.

In the watercraft operating system 100 according to the present preferred embodiment explained above, the back-and-forth directional thrust component, oriented in opposition to that generated when the propeller 14 is located in the first steering position, is enabled to be generated when the propeller 14 is located in the second steering position by reversing the steering position of the propeller 14 at the predetermined time interval. Accordingly, the back-and-forth directional thrust component, generated by the thrust for causing the watercraft 10 to perform bow turning, can be inhibited from being oriented to only either the front side or the rear side in an eccentric manner. As a result, it is made possible to achieve enhancement in position keeping accuracy under the compass direction keeping control.

One preferred embodiment of the present invention has been explained above. However, the present invention is not limited to the preferred embodiment described above and a variety of changes can be made without departing from the gist of the present invention.

The pivotable range of the lower portion 13 of the marine propulsion device 3 is not limited to that described in the preferred embodiment described above. For example, the lower portion 13 may be pivotable in the right-and-left direction within an angular range of 180 degrees (90 degrees on the right side and 90 degrees on the left side) or an angular range of 120 degrees (60 degrees on the right side and 60 degrees on the left side). The second steering position may be set as a position obtained by reversing the first steering position in the back-and-forth direction. For example, when the first steering position is set as a position tumed by 70 degrees with respect to the back-and-forth direction, the second steering position may be set as a position turned rightward by 110 degrees with respect to the back-and-forth direction.

### REFERENCE SIGNS LIST

3: Marine propulsion device, 10: Watercraft, 12: Upper portion, 13: Lower portion, 14: Propeller, 30: Watercraft operating controller, 100: Watercraft operating system

## Claims

1. A system (100) for controlling a watercraft (10), the system (100) comprising:
a marine propulsion device (3) including a propeller (14), the marine propulsion device (3) configured to generate a thrust for propelling the watercraft (10); and
a controller (30) configured or programed to execute a compass direction keeping control for keeping the watercraft (10) oriented in a target compass direction by controlling both a magnitude and a direction of the thrust, wherein
the controller (30) is further configured or programed to
turn the propeller (14) between a first steering position and a second steering position at a predetermined time interval under the compass direction keeping control, the first steering position being a position where the thrust is applied to the watercraft (10) in a back-and-forth direction and a right-and-left direction, the second steering position being obtained by reversing the first steering position in either the back-and-forth direction or the right-and-left direction,
control the magnitude of the thrust and a rotational direction of the propeller (14) such that the watercraft (10) performs bow turning toward the target compass direction when the propeller (14) is located in each of the first and second steering positions, and
control the rotational direction of the propeller (14) such that a direction of the thrust in the back-and-forth direction generated at the first steering position and a direction of the thrust in the back-and-forth direction generated at the second steering position are opposite when the watercraft (10) is caused to perform bow turning in the same direction at the first steering position and the second steering position.

2. The system (100) according to claim 1, wherein
the controller (30) is further configured or programed to
stop generating the thrust until the propeller (14) approaches the second steering position when the propeller (14) is turned from the first steering position to the second steering position, and
stop generating the thrust until the propeller (14) approaches the first steering position when the propeller (14) is turned from the second steering position to the first steering position.

3. The system (100) according to claim 1 or 2, wherein the controller (30) is further configured or programed to change a value of the predetermined time interval in accordance with a velocity of the watercraft (10) moving in the right-and-left direction under the compass direction keeping control.

4. The system (100) according to any one of claims 1 to 3, wherein a value of the predetermined time interval is set to be greater than or equal to 20 seconds and less than or equal to 70 seconds.

5. The system (100) according to any one of claims 1 to 4, wherein a rudder angle corresponding to the first steering position is set to be greater than or equal to 60 degrees and less than or equal to 80 degrees.

6. The system (100) according to any one of claims 1 to 5, further comprising:
a cockpit (10b) disposed in the watercraft (10), wherein
the cockpit (10b) is disposed further on a front side than a center of gravity (G) of the watercraft (10) in the back-and-forth direction.

7. The system (100) according to any one of claims 1 to 6, wherein the marine propulsion device (3) is an electric outboard motor including an electric motor (16), the marine propulsion device (3) disposed on a stern of the watercraft (10) in a middle of the watercraft (10) in the right-and-left direction.

8. The system (100) according to any one of claims 1 to 7, wherein
the marine propulsion device (3) further includes an upper portion (12) and a lower portion (13), the lower portion (13) supported to be pivotable about an axis of a steering axle (15a) with respect to the upper portion (12), and
the propeller (14) is disposed on the lower portion (13).

9. A method of controlling a watercraft (10) executed in an automated watercraft operation, the method comprising:
executing a compass direction keeping control for keeping the watercraft (10) oriented in a target compass direction by controlling both a magnitude and a direction of a thrust generated by a marine propulsion device (3);
turning a propeller (14) of the marine propulsion device (3) between a first steering position and a second steering position at a predetermined time interval under the compass direction keeping control, the first steering position being a position where the thrust is applied to the watercraft (10) in a back-and-forth direction and a right-and-left direction, the second steering position being obtained by reversing the first steering position in either the back-and-forth direction or the right-and-left direction,
controlling the magnitude of the thrust and a rotational direction of the propeller (14) such that the watercraft (10) performs bow turning toward the target compass direction when the propeller (14) is located in each of the first and second steering positions; and
controlling the rotational direction of the propeller (14) such that a direction of the thrust in the back-and-forth direction generated at the first steering position and a direction of the thrust in the back-and-forth direction generated at the second steering position are opposite when the watercraft (10) is caused to perform bow turning in the same direction at the first steering position and the second steering position.

10. The method according to claim 9, further comprising:
stopping generating the thrust until the propeller (14) approaches the second steering position when the propeller (14) is turned from the first steering position to the second steering position; and
stopping generating the thrust until the propeller (14) approaches the first steering position when the propeller (14) is turned from the second steering position to the first steering position.

11. A watercraft (10) comprising:
a hull (2); and
the system (100) according to any one of claims 1 to 8, the system (100) disposed in the hull (2).
